# EUROPEAN PATENT SPECIFICATION

(11) **EP 3 249 390 B1**
(45) Date of publication and mention of the grant of the patent: **04.11.2020**
(21) Application number: 15878707.7
(22) Date of filing: 19.01.2015
(51) Int. Cl.: G01N 21/90, G01N 21/88

(54) **LIGHT TESTER**
LICHTTESTER
TESTEUR DE LUMIÈRE

(43) Date of publication of application: 29.11.2017
(73) Proprietor: Daiwa Can Company, Tokyo 100-7009 (JP)
(72) Inventor: YAMAMOTO, Yuki, Sagamihara-shi Kanagawa 252-5183 (JP); NAGASE, Yukihiko, Sagamihara-shi Kanagawa 252-5183 (JP)
(74) Representative: Browne, Robin Forsythe
(86) International application number: PCT/JP2015/051268
(87) International publication number: WO 2016/117011

(56) References cited:
- WO-A1-2009/022538
- WO-A1-2014/077099
- JP-A- H06 308 048
- JP-A- H07 318 506
- JP-A- 2004 294 369
- JP-A- 2009 025 131
- JP-A- 2013 068 500

## Description

### TECHNICAL FIELD

The present invention relates to a light tester comprising a light source for emitting light to a can body conveyed to an inspection zone, and a light sensor for detecting light transmitting through the can body.

### BACKGROUND ART

One example of a pinhole inspection method of can using a light tester is described in Japanese Patent Laid-Open No. 2004-294391. According to the teachings of Japanese Patent Laid-Open No. 2004-294391, cans are conveyed continuously by a star wheel, and light transmitted into the can through a pinhole is detected by a photomultiplier tube situated inside of the can. Such detection of the light transmitted into the can is carried out plurality of times, and three detection values are compared to a threshold value. If two of three detection values are greater than the threshold value, presence of the pinhole is determined. If only one of three detection values is greater than the threshold value, leakage of the light from a sealing member sealing the can is determined.

Japanese Patent No. H8-20381 describes a self-diagnosing apparatus for diagnosing a detecting function of a pinhole tester. The apparatus taught by Japanese Patent No. H8-20381 is provided with a turret disc having a pinhole for testing that is rotated together with a star wheel for conveying a can to the pinhole tester. According to the teachings of Japanese Patent No. H8-20381, light transmitted through the pinhole is detected by a photosensor during pinhole testing. If a detection signal is not transmitted from the photosensor even if the pinhole reaches a test position, the self-diagnosing apparatus determines a malfunction of the photosensor to detect a pinhole.

According to the teachings of Japanese Patent Laid-Open No. 2004-294391, the light emitted from a light source is transmitted directly to the photomultiplier tube without being blocked by the can if one or more can holder(s) of the star wheel is vacant. In this case, detection value is increased excessively. On the other hand, according to conventional pinhole detecting devices using a photomultiplier tube, a reduction in a detection value may be delayed with respect to a reduction in the incident light. For example, if the incident light considerably is larger than the light transmitted through the pinhole, a reduction in the detection value is delayed even if the incident light is reduced after that, and hence the detection signal larger than the actual incident light is transmitted for a certain period of time. Specifically, if one of can holders of the star wheel is vacant during execution of pinhole test while conveying the cans at a high speed, detection values of the following cans may be increased larger than actual values by the excessive incident light. Consequently, a flawless can may be determined as a defective can to be rejected. Such erroneous decision may be made increased with an increase in a conveying speed or a detection speed, and such disadvantage may also occur in the apparatus taught by Japanese Patent No. H8-20381.

### SUMMARY OF INVENTION

The present disclosure has been conceived noting the foregoing technical problems, and it is therefore an object of the present invention to provide a light tester that can prevent a rejection of a flawless can due to an erroneous detection of a pinhole.

The present disclosure relates to a light tester having a light source that emits light to a can body conveyed to an inspection zone, and a light sensor that transmits a detection value of an amount of the light passing through the can body, that transmits a detection signal indicating an existence of a pinhole in the can body in a case that a maximum value of the detection value in the inspection zone exceeds a predetermined threshold. In order to achieve the above-explained objective, the light tester comprises: a first inspection pattern in which a first value as a constant value is employed as the threshold; a second inspection pattern in which a second value is employed as the threshold that is obtained by adding a predetermined judgment value to the detection value detected at a point when the detection value starts increasing in the inspection zone; and a third inspection pattern in which a third value is employed as the threshold that is obtained by adding another judgment value to an average value between the detection value detected at a point when the can body enters into the inspection zone and the detection value detected at a point when the can body exits from the inspection zone.

According to the present disclosure, at least two of the first inspection pattern to the third inspection pattern may be conducted simultaneously.

According to the present disclosure, the first inspection pattern to the third inspection pattern may be conducted simultaneously.

According to the present disclosure, the second inspection pattern and the third inspection pattern may be conducted simultaneously in a case that the maximum value is smaller than the first value.

According to the present disclosure, the light tester may transmit the detection signal to an ejecting device that ejects the can body having a pinhole upon reception of the detection signal, and a warning signal to a warning device that indicates a detection of the pinhole in the can body, when the maximum value exceeds any one of the first to third values.

Thus, according to the present disclosure, the light tester conducts: the inspection pattern in which the threshold is a constant value; the inspection pattern in which the threshold is obtained by adding the judgment value to the detection value detected when the detection value starts increasing; and the inspection pattern in which the threshold is obtained by adding another judgment value to the average value between the detection values detected when the can body enters and exits into/from the inspection zone. Therefore, even if the light sensor is affected by a large amount of light, an erroneous rejection of a flawless can having no pinhole may be prevented and frequency of re-testing of pinhole may be reduced.

In addition, according to the present disclosure, not only two of the inspection patterns, but also all of the inspection patterns may be conducted simultaneously. Instead, the second inspection pattern and the third inspection pattern may also be conducted simultaneously in a case that the maximum value is smaller than the first value. Further, when the maximum value exceeds any one of the first to third values, the detection signal is transmitted to the ejecting device that ejects the can body having a pinhole upon reception of the detection signal, and the warning signal is transmitted to the warning device that indicates a detection of the pinhole in the can body. Therefore, only the defective can may be ejected by the ejecting device while notifying an operator of the light tester or other person of a detection of the defective can.

### BRIEF DESCRIPTION OF THE DRAWINGS

Fig. 1 is a flowchart showing a first example of a control executed by the controller of the light tester according to the present disclosure.
Fig. 2 is a flowchart showing a first inspection pattern according to the present disclosure.
Fig. 3 is a flowchart showing a second inspection pattern according to the present disclosure.
Fig. 4 is a flowchart showing a third inspection pattern according to the present disclosure.
Fig. 5 is a time chart during execution of the inspection patterns by the light tester according to the present disclosure.
Fig. 6 is a time chart during execution of the second inspection pattern of the light tester according to the present disclosure.
Fig. 7 is a time chart during execution of the third inspection pattern of the light tester according to the present disclosure.
Fig. 8 is a schematic illustration showing the light tester according to the present disclosure.
Fig. 9 is a cross-sectional view of the light tester according to the present disclosure.
Fig. 10 is a flowchart showing a second example of a control executed by the controller of the light tester according to the present disclosure.

### DESCRIPTION OF THE PREFERRD EMBODIMENT(S)

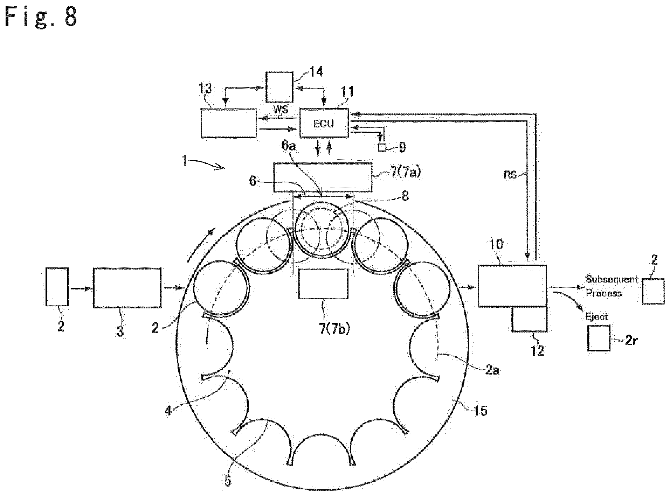

The light tester according to the present disclosure is adapted to carry out a pinhole inspection based on light transmitted through a can body. Turning now to Fig. 8, there is shown one example of the light tester according to the present disclosure. A can body 2 as an inspection object of the light tester 1 is a bottomed-cylindrical interim product of a metal can container to be subjected to a several treatments before being filled with content. The can body 2 is delivered to a pocket 5 of a star wheel 4 of the light tester 1 through a conveyer 3. In order to convey the can body 2 to an inspection zone 6, the star wheel 4 is rotated e.g., by a not shown servomotor. That is, the can body 2 is rotated by a rotation of the star wheel 4. The can body 2 is held in the pocket 5 in such a manner that an opening thereof is opened toward a below-mentioned light sensor, and an open end of the can body 2 is pushed onto a below-mentioned turret that is rotated together with the star wheel 4 thereby preventing light from entering an internal space of the can body 2.

The inspection zone 6 is formed arcuately along a turning orbit 2a of the can body 2. A width or a circular length of the inspection zone 6 is slightly wider than a diameter of the can body 2, and a light source 7 is disposed along the turning orbit 2a. In the example shown in Fig. 8, a first light source 7a is disposed in radially outer side of the turning orbit 2a, and a second light source 7b is disposed in radially inner side of the turning orbit 2a. For example, a light-emitting diode may be used as each of the light sources 7a and 7b so that power consumption may be reduced in comparison with a case in which a fluorescent bulb or an electric light bulb is used as the light source 7. The light sensor 8 is situated at a center 6a of the inspection zone 6 while being fixed to a not shown stationary member, and the opening of the can body 2 passes in front of a not shown light receiving section of the light sensor 8.

Here will be briefly explained an incident light to the light receiving section of the light sensor 8 through a pinhole in the can body 2. As described, the light sensor 8 is situated at the center 6a of the inspection zone 6 formed along the turning orbit 2a of the can body 2. That is, an area of the pinhole in the can body 2 being conveyed by the star wheel 4 is increased in the inspection zone 6 gradually from an entrance until the can body 2 reaches the center 6a, and then reduced gradually until the can body 2 is moved out of an exit of the inspection zone 6. For this reason, an amount of the incident light to the light receiving section of the light sensor 8 through the pinhole in the can body 2 is increased gradually from the entrance of the inspection zone 6 with the approach of the can body 2 to the light sensor 8. That is, if the pinhole exists in the can body 2, a detection value X1 of an amount of light entering into the can body 2 detected by the light sensor 8 changes parabolic manner, and increases to a maximum value at the center 6a of the inspection zone 6.

For example, a photomultiplier tube may be used as the light sensor 8. Specifically, the photomultiplier tube is adapted to photoelectrically convert light energy into electric energy, and to multiply the electric energy to be outputted. Instead, a photodiode, a phototransistor or the like may also be used as the light sensor 8. That is, the light sensor 8 transmits a current value or a voltage value as a detection value in accordance with an amount of the incident light to the light receiving section. However, if the incident light to the light receiving section is excessive, a reduction in the detection value of the light sensor 8 is delayed with respect to a reduction in the incident light by residual energy. In this case, therefore, the detection value of the light sensor 8 is increased excessively if the incident light to the light receiving section is excessive. Then, when the incident light to the light receiving section is reduced, a reduction in the detection value of the light sensor 8 is delayed with respect to a reduction in the incident light and hence the detection value of the light sensor 8 is kept to a larger value than an actual amount of the incident light to the light receiving section for a certain period of time. That is, it takes some time to wait until the light sensor 8 returns to a normal condition.

In order to detect a rotational angle of the star wheel 4, the light tester 1 is provided with a rotational angle sensor 9 as a conventional rotational angle sensor. A detection signal of the rotational angle sensor 9 is transmitted to a below mentioned ECU. According to the preferred embodiment, the ECU determines entrance and exit of the can body 2 into/from the inspection zone 6 based on the detection signal of the rotational angle sensor 9. As explained later, when a determination of entrance of the can body 2 into the inspection zone 6 is made, approximately half of the can body 2 has entered into the inspection zone 6. By contrast, when a determination of exit of the can body 2 from the inspection zone 6 is made, approximately half of the can body 2 has exited from the inspection zone 6. After the can body 2 is moved out of the inspection zone 6, the can body 2 is further transported to a subsequent process by a discharging device 10.

As described, the light tester 1 is further provided with the electronic control unit (to be abbreviated as the "ECU" hereinafter) 11 as a controller. The ECU 11 is composed mainly of a microcomputer configured to carry out a calculation based on incident data and preinstalled data, and to transmit a calculation result in the form of command signal. For example, the detection value X1 detected by the light sensor 8, and the detection signal of the rotational angle sensor 9 and so on are transmitted to the ECU 11. In order to determine an existence of pinhole in the can body 2, the ECU 11 is further configured to calculate a plurality of threshold values, and to carry out a calculation using the threshold values and the detection value X1 detected by the light sensor 8. If the ECU 11 detects the pinhole in the can body 2, the ECU transmits a rejection signal RS as a detection signal to a below-mentioned ejecting device 12, and a warning signal WS to a below mentioned warning device 13. In the following explanation, a can body having a pinhole will be called the "defective can" 2r.

The ejecting device 12 is arranged on the discharging device 10 to eject the defective can 2r from the discharging device 10 upon reception of the rejection signal RS. The warning device 13 indicates a detection of the defective can 2r on a monitor 14 upon reception of the warning signal WS. Instead, the warning device 13 may also be adapted to notify an operator or other person of a detection of the defective can 2r by sound, light, vibrations, or combination of those means. Further, the warning device 13 may also be adapted to stop the conveyer 3 or to stop a rotation of the star wheel 4. Thus, the warning device 13 notify the operator of the light tester 1 or other person of a detection of the defective can 2r.

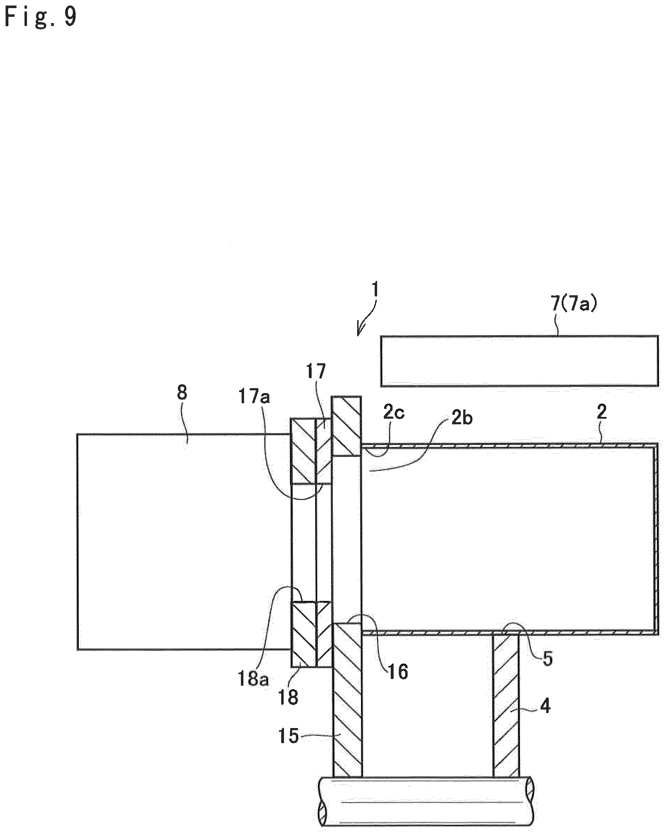

Fig. 9 shows a cross-section of the light tester 1 shown in Fig. 8. A turret 15 is arranged coaxially with the star wheel 4 in such a manner as to be rotated integrally with the star wheel 4. In the turret 15, through holes 16 are formed at positions opposed to pockets 5, and a diameter of each of the through holes 16 is smaller than the opening 2b of the can body 2. A free end 2c of the opening 2b of the can body 2 is pushed tightly onto the turret 15 around the through hole 16 in such a manner as to prevent penetration of the light emitted from the light source 7 into the can body 2 through a clearance between the opening 2c of the can body 2 and the turret 15.

The light sensor 8 is disposed on an opposite side of the star wheel 4 across the turret 15. A first light-blocking member 17 is attached to a face of the turret 15 opposed to the light sensor 8, and a first inspection hole 17a that is diametrically smaller than the through hole 16 of the turret 15 is formed on the first light-blocking member 17. In addition, a second light-blocking member 18 is attached to the light sensor 8 in such a manner as to be slidably contacted to the first light-blocking member 17, and a second inspection hole 18a that is diametrically identical to the first inspection hole 17a is formed on the second light-blocking member 18. Thus, undesirable penetration of the light into the can body 2 through a clearance between the light sensor 8 and the turret 15 rotated relatively thereto is prevented by the first light-blocking member 17 and the second light-blocking member 18. When the first inspection hole 17a is overlapped with the second inspection hole 18a, the light transmitted through the pinhole in the can body 2 falls on the light receiving section of the light sensor 8.

### (Example 1)

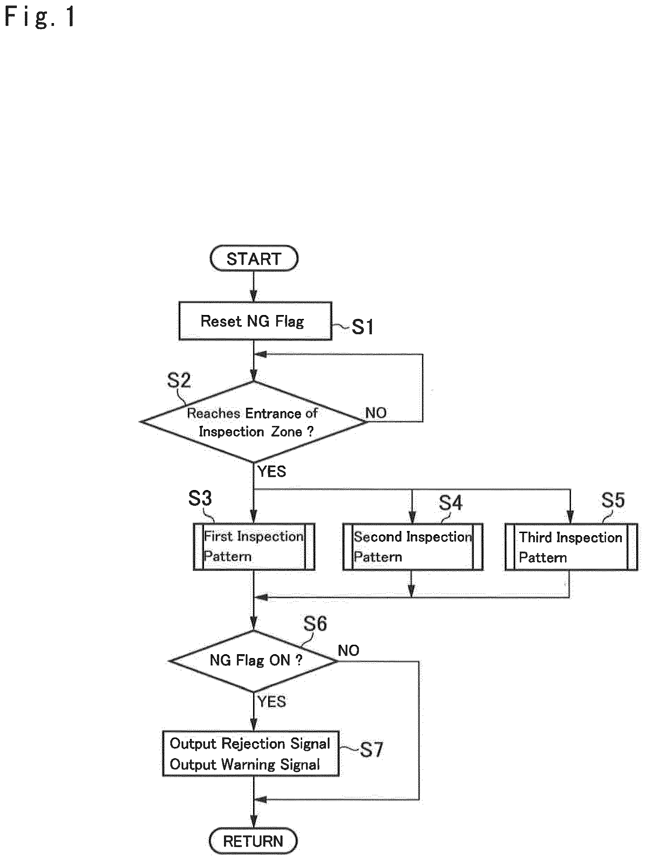

The light tester 1 according to the present disclosure conducts a pinhole inspection in the can body 2 based on the detection value of the light transmitted though the can body 2 detected by the light sensor 8. Fig. 1 shows one example of a routine for detecting a pinhole in the can body, and the routine shown in Fig. 1 is repeated at predetermined interval or synchronously with a rotation of the star wheel 4. In the routine shown in Fig. 1, first of all, a flag representing an existence of a pinhole (to be called the "NG flag" hereinafter) is reset (at step S1).

Then, it is determined whether or not the predetermined pocket 5 of the star wheel 4 reaches the entrance of the inspection zone 6 (at step S2). For example, such determination at step S2 may be made by detecting a rotational angle of the star wheel 4 by the rotational angle sensor 9, and repeated until the predetermined pocket 5 of the star wheel 4 reaches the entrance of the inspection zone 6. The determination at step S2 is made even if the can body 2 is not held in the pocket 5. When the entrance of the predetermined pocket 5 into the inspection zone 6 is determined, that is, at a point at which the answer of step S2 is changed from NO to YES, approximately half of the can body 2 has entered into the inspection zone 6.

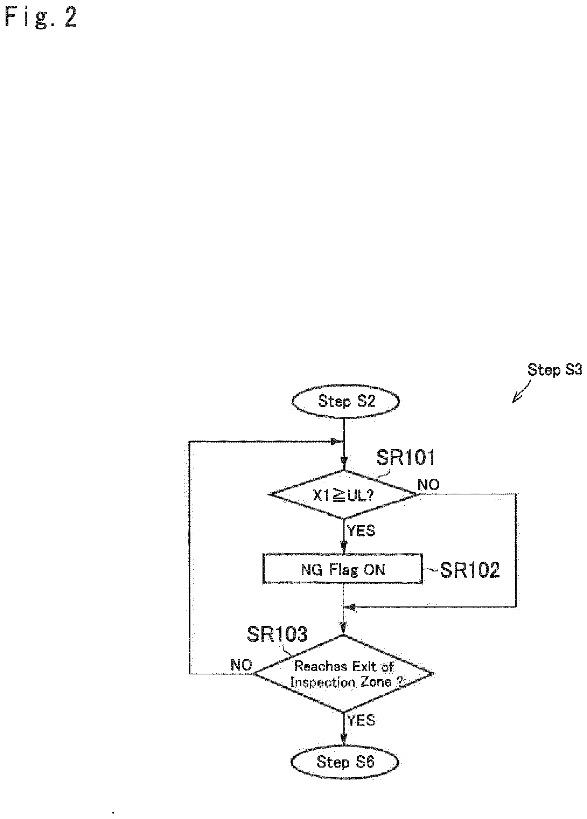

If the answer of step S2 is YES, a first inspection pattern (at step S3) and a second inspection pattern (at step S4) are conducted simultaneously. Those inspection patterns will be explained hereinafter. Turning to Fig. 2, there is shown one example of a subroutine for conducting the first inspection pattern. If the answer of step S2 is YES, then it is determined whether or not the detection value X1 detected by the light sensor 8 is greater than a first value UL (at step SR101). Specifically, the first value UL is a constant threshold value for determining an existence of the pinhole in the can body 2 certainly. If the detection value X1 is greater than the first value UL, the ECU 11 determines that the pinhole exists in the can body 2 or that the can body 2 is not held in the pocket 5. The first value UL may be determined in advance based on an experimental result, and according to the preferred example, the first value UL is set to 3.0V

If the answer of step SR101 is YES, the NG flag is turned on (at step SR102), and then it is determined whether or not the pocket 5 reaches the exit of the inspection zone 6 (at step SR103). By contrast, if the answer of step SR101 is NO, the routine progresses to step SR103 without turning on the NG flag.

Such determination of step SR103 may be made by detecting a rotational angle of the star wheel 4 by the rotational angle sensor 9. If the pocket 5 reaches the exit of the inspection zone 6 so that the answer of step SR103 is YES, the routine progresses to step S6 of the routine shown in Fig. 1. By contrast, if the pocket 5 has not yet reached the exit of the inspection zone 6 so that the answer of step SR103 is NO, the routine is returned to step SR101. When a determination of exit of the pocket 5 holding the can body 2 from the inspection zone 6 is made, that is, at a point at which the answer of step SR103 is changed from NO to YES, approximately half of the can body 2 has exited from the inspection zone 6. That is, by conducting the first inspection pattern, the can body 2 whose detection value X1 detected by the light sensor 8 is greater than the first value UL is determined as the defective can 2r to be rejected.

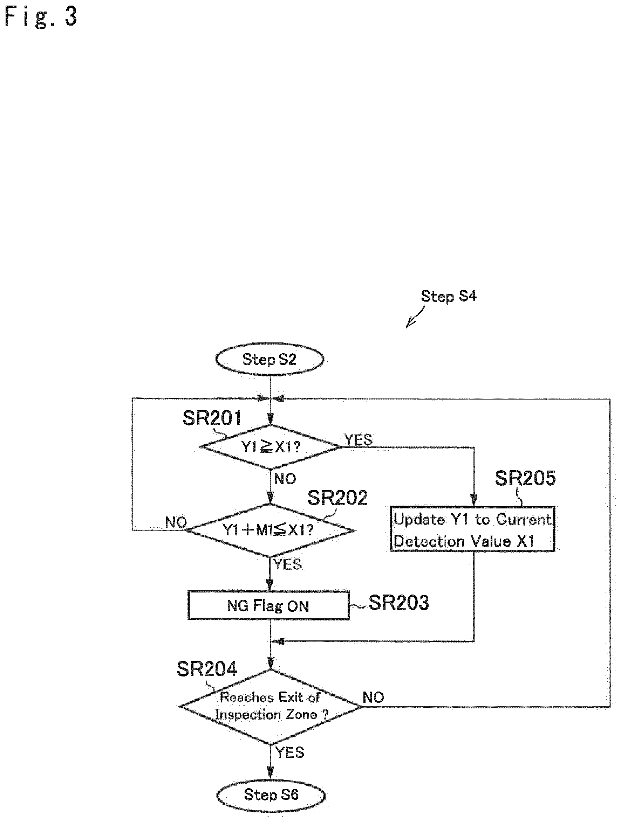

Turning to Fig. 3, there is shown one example of a subroutine for conducting the second inspection pattern. If the answer of step S2 is YES, then it is determined whether or not the detection value X1 detected by the light sensor 8 is greater than a first stored value Y1 that is stored temporarily (at step SR201). Here will be briefly explained the first stored value Y1. The ECU 11 is configured to temporarily store every detection values of the light sensor 8 during execution of the routine shown in Fig. 1. Specifically, the first stored value Y1 is a previous value of the light entering into the last can body 2 passed through the inspection zone 6 that is transmitted from the light sensor 8 to the ECU 11. If the current detection value X1 is smaller than the first stored value Y1 as a previous value of the detection value X1, this means that the detection value X1 is decreasing. By contrast, if the current detection value X1 is greater than the first stored value Y1, this means that the detection value X1 is increasing. That is, at step SR201, it is determined whether or not the detection value X1 detected by the light sensor 8 is increasing.

Here will be explained the case in which the detection value X1 is increasing. If the detection value X1 is greater than the first stored value Y1 so that the answer of step SR201 is NO, then, it is determined whether or not the detection value X1 is greater than a second value SL that is obtained by adding a predetermined judgement value M1 to the first stored value Y1 (at step S202). For example, the detection value X1 detected by the light sensor 8 may be changed by a noise. That is, a determination of an existence of the pinhole in the can body 2 may be made erroneously if the noise is taken into account. In order to avoid such disadvantage, the judgement value M1 is added to the first stored value Y1. The judgement value M1 may be set based on an experimental result, and according to the preferred example, the judgement value M1 is set to 0.5V That is, the second value SL is a variable.

If the detection value X1 is greater than the second value SL so that the answer of step SR202 is YES, an existence of the pinhole in the can body 2 is made. In this case, the NG flag is turned on (at step SR203) as the aforementioned step SR102 in the routine shown in Fig. 2. By contrast, if the detection value X1 is smaller than the second value SL while the detection value X1 is increasing so that the answer of step SR202 is NO, the routine is returned to step SR201. For example, the answer of step SR202 would be NO in a case that the can body 2 has not reached the center 6a of the inspection zone 6 at which the detection value X1 increases to the maximum value. In the case that the answer of step SR202 is NO, the routine is returned to step SR201 to compare the detection value X1 detected at the center 6a of the inspection zone 6 to the second value SL. If the detection value X1 detected at the center 6a of the inspection zone 6 is still smaller than the second value SL so that the answer of step SR202 is NO, the routine is returned to step SR201 again. Then, the detection value X1 starts decreasing gradually after the can body 2 passes through the center 6a of the inspection zone 6, and in this case, the answer of step SR201 will be YES.

After step S203, it is determined whether or not the pocket 5 reaches the exit of the inspection zone 6 (at step SR204). Such determination is similar to that at step SR103 in the routine shown in Fig. 2. If the pocket 5 has reached the exit of the inspection zone 6 so that the answer of step SR204 is YES, the routine progresses to step S6 in the routine shown in Fig. 1. By contrast, if the pocket 5 has not yet reached the exit of the inspection zone 6 so that the answer of step SR204 is NO, the routine is also returned to step SR201 to repeat the above-explained control until the pocket 5 reaches the exit of the inspection zone 6.

Next, here will be explained a case in which the detection value X1 is decreasing or constant. In other words, here will be explained a case in which the detection value X1 is smaller than the first stored value Y1 so that the answer of step SR201 is YES. In this case, the first stored value Y1 is updated to the current detection value X1 (at step SR205). Then, the routine progresses to step S204. Thus, as a result of conducting the second inspection pattern, only the can body 2 whose detection value X1 detected by the light sensor 8 is greater than the second value SL is determined as the defective can 2r to be rejected.

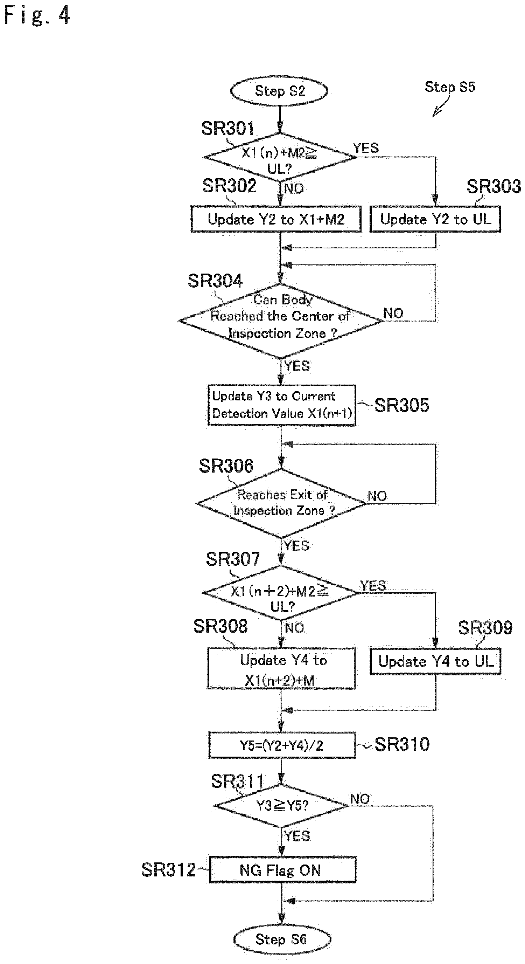

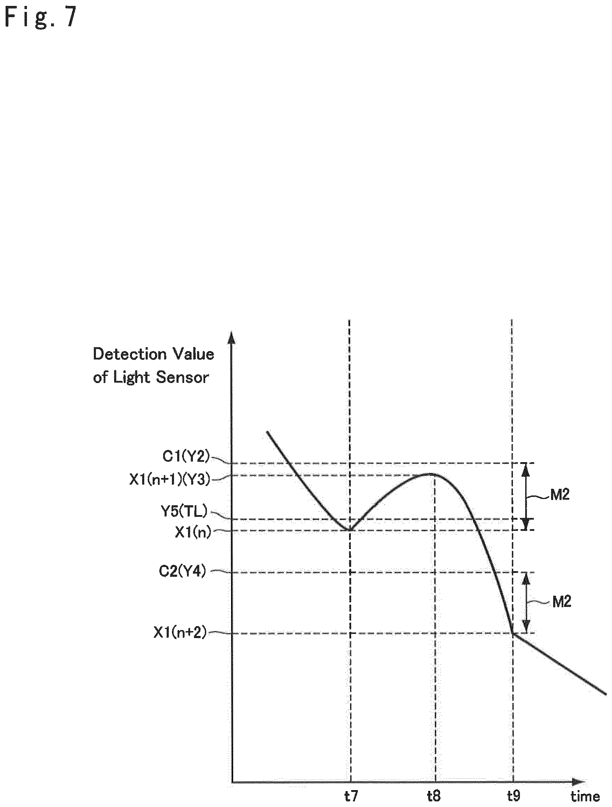

Turning to Fig. 4, there is shown one example of a subroutine for conducting the third inspection pattern. As described, a reduction in the detection value X1 detected by the light sensor 8 is delayed with respect to a reduction in the incident light if an amount of the incident light is large. Therefore, if a reduction in the decreasing detection value X1 of the light passing through the pinhole per unit of time is large, the detection value X1 decreases gradually as indicated in Fig. 7. In this case, a maximum value of the detection value X1 may not exceed the second value SL, and hence the defective can 2r may not be found by the second inspection pattern even if it has a pinhole. That is, such defective can 2r is rejected by the third inspection pattern. Specifically, if the answer of step S2 in the routine shown in Fig. 1 is YES, a detection value X1(n) at a point when the can body 2 enters into the inspection zone 6 is obtained. Then, a first total value C1 obtained by adding another judgement value M2 to the detection value X1(n) is compared to the first value UL (at step SR301). The judgement value M2 is employed as the same reason as the judgement value M1. According to the preferred example, the judgement value M2 is also set to 0.5V as the judgement value M1. However, the judgement value M2 may also be differentiated from the judgement value M1. If the first total value C1 is smaller than the first value UL so that the answer of step SR301 is NO, a second stored value Y2 is updated to the first total value C1 (at step SR302). By contrast, if first total value C1 is greater than the first value UL so that the answer of step SR301 is YES, the second stored value Y2 is updated to the first value UL (at step SR303).

After executing the update of the stored value at step SR302 or SR303, it is determined whether or not the pocket 5 of the star wheel 4 reaches the center 6a of the inspection zone 6 (at step SR304). Such determination at step SR304 may be made by detecting a rotational angle of the star wheel 4 by the rotational angle sensor 9, and repeated until the pocket 5 reaches the center 6a of the inspection zone 6. As described, if an excessive amount of light is detected by the light sensor 8 but the detection value of the light is not increasing, the detection value of the light passing through the pinhole in the can body 2 increases to the maximum value at the center 6a of the inspection zone 6. Therefore, if the pocket 5 has reached the center 6a of the inspection zone 6 so that the answer of step SR304 is YES, a detection value X1(n+1) at a point when the pocket 5 reaches the center 6a of the inspection zone 6 is obtained. Then, a third stored value Y3 is updated to the detection value X1(n+1) (at step SR305).

After step S305, it is determined whether or not the pocket 5 has reached the exit of the inspection zone 6 (at step SR306). Such determination is repeated until the pocket 5 gets out of the inspection zone 6. If the pocket 5 has reached the exit of the inspection zone 6 so that the answer of step SR306 is YES, a detection value X1(n+2) at a point when the pocket 5 reaches the exit of the inspection zone 6 is obtained, and then, it is determined whether or not a second total value C2 obtained by adding the judgement value M2 to the detection value X1(n+2) is greater than the first value UL (at step SR307).

If the answer of step S307 is NO, a fourth stored value Y4 is updated to the second total value C2 (at step SR308). By contrast, if the answer of step S307 is YES, the fourth stored value Y4 is updated to the first value UL (at step SR309). After step SR308 or SR309, an average value Ave between the second stored value Y2 and the fourth stored value Y4 is calculated (at step SR310). The average value Ave corresponds to a third value TL, and a fifth stored value Y5 is updated to the third value TL. That is, the third value TL is a variable.

After step SR310, it is determined whether or not the third stored value Y3 is greater than the fifth stored value Y5 (at step SR311). Specifically, the answer of step SR311 will be YES if the detection value X1(n+1) detected by the light sensor 8 at the center 6a of the inspection zone 6 is greater than the third value TL. In this case, the routine progresses to step SR312 to turn on the NG flag, and further progresses to step S6 in the routine shown in Fig. 1. By contrast, if the detection value X1(n+1) at the center 6a of the inspection zone 6 is smaller than the third value TL so that the answer of step SR311 is NO, the routine progresses directly to step S6 in the routine shown in Fig. 1 without turning on the NG flag. Thus, as a result of conducting the third inspection pattern, only the can body 2 whose detection value X1(n+1) at the center 6a is greater than the third value TL is determined as the defective can 2r to be rejected.

At step S6 in the routine shown in Fig. 1, it is determined whether or not the NG flag is turned ON as a result of conducting the foregoing subroutines. If the NG flag is turned ON so that the answer of step S6 is YES, the ECU 11 transmits the rejection signal RS to the ejecting device 12 to eject the defective can 2r, and the warning signal WS to the warning device 13 (at step S7). Then, the routine is returned. By contrast, if the NG flag is OFF so that the answer of step S6 is NO, this means that no defective can 2r has been found and hence the routine is returned without carrying out any specific control.

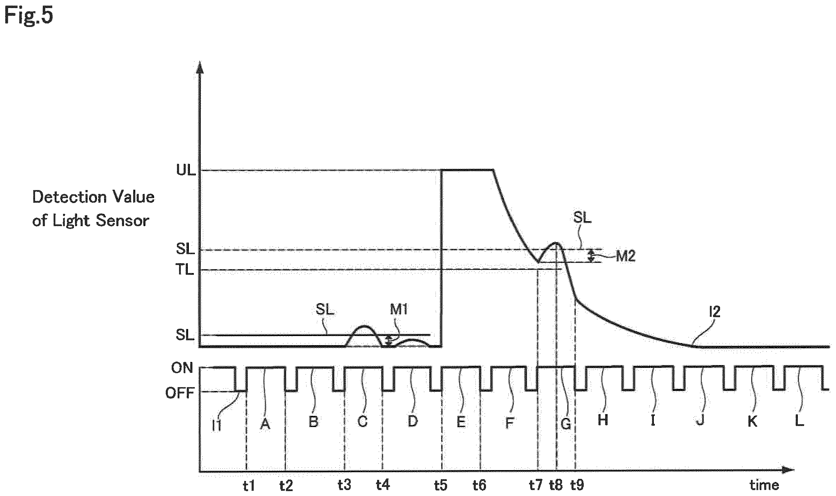

Turning to Fig. 5, there is shown a time chart for explaining the foregoing inspection patterns to be conducted by the light tester according to the present application. First of all, here will be explained a case in which the can body 2 is held in the pocket 5 of the star wheel 4. When the predetermined pocket 5 of the star wheel 4 reaches the entrance of the inspection zone 6 at point t1, a flag indicating an arrival of the pocket 5 to the entrance of the inspection zone 6 is turned on. As described, at point t1, approximately half of the can body 2 has entered into the inspection zone 6. Then, when the pocket 5 reaches the exit of the inspection zone 6 at point t2, the aforementioned flag is turned off. At point t2, approximately half of the can body 2 comes out of the inspection zone 6, but remaining half of the can body 2 still remains in the inspection zone 6. On/off situation of the flag is indicated by a zigzag solid line 11 in Fig. 5. In the solid line 11, signs A to L represent an existence of the pocket 5 in the inspection zone 6. In Fig. 5, a change in the detection value X1 is indicated by a solid curve 12.

In the inspection zone 6, the lights emitted from the light sources 7 fall on the can body 2 from radially outer sides of the can body 2. If there is no pinhole in the can body 2, the detection value X1 of the light detected by the light sensor 8 would be zero or substantially constant value. In Fig. 5, specifically, the detection values X1 of the lights passing through the can bodies 2 held in the pockets 5 represented by the signs A and B are substantially constant without exceeding any of the first value UL, the second value SL and the third value TL. Consequently, the can bodies 2 held in those pockets 5 are determined as flawless cans which do not have a pinhole.

By contrast, if there is a pinhole in the can body 2, the detection value X1 of the light passing through the can body 2 that is detected by the light sensor 8 increases. As described, the detection value X1 changes parabolic manner, and increases to the maximum value at the center 6a of the inspection zone 6.

According to the present disclosure, in order to eject the defective can 2r, the second value SL is obtained by adding the judgement value M1 to the detection value X1 at point t3 when the detection value X1 starts increasing as shown in Fig. 5. Then, when the detection value X1 exceeds the second value SL, an existence of the pinhole in the can body 2 is determined. Consequently, the rejection signal RS is transmitted to the ejecting device 12 and the warning signal WS is transmitted to the warning device 13 at point t4 when the pocket 5 reaches the exit of the inspection zone 6. This is the aforementioned second inspection pattern. By contrast, if the detection value X1 does not exceed the second value SL, an existence of the pinhole in the can body 2 is not determined and hence the rejection signal RS and the warning signal WS are not transmitted. Likewise, if the detection value X1 exceeds the first value UL, an existence of the pinhole in the can body 2 is also determined. Consequently, the rejection signal RS is transmitted to the ejecting device 12 and the warning signal WS is transmitted to the warning device 13. This is the aforementioned first inspection pattern.

Next, here will be explained a case in which the can body 2 is not held in the pocket 5 of the star wheel 4. In the example shown in Fig. 5, the can body 2 is not held in the pocket 5 represented by E in Fig. 5. In this case, when the pocket 5 represented by E reaches the entrance of the inspection zone 6 at point t5, the light emitted from the light sources 7 are directly transmitted to the light sensor 8 and the detection value X1 exceeds the first value UL. The detection value X1 also exceeds the first value UL if the can body 2 has a large pinhole. In any of those cases, if the detection value X1 is greater than the first value UL, the rejection signal RS is transmitted to the ejecting device 12 and the warning signal WS is transmitted to the warning device 13 at point t6 when the pocket 5 represented by E reaches the exit of the inspection zone 6. This is the aforementioned first inspection pattern.

As described, if the incident light to the light sensor 8 is excessive, a reduction in the detection value X1 detected by the light sensor 8 is delayed with respect to a reduction in the incident light, and it takes some time to wait until the light sensor 8 returns to a normal condition. In the example shown in Fig. 5, specifically, an existence of pinhole in the can body 2 held in the pocket 5 represented by F is determined in a condition that the light sensor 8 is still affected by a large amount of light. In this case, if the can body 2 does not have a pinhole, the light is not transmitted to the light sensor 8 and the detection value X1 decreases gradually as shown in Fig. 5. By contrast, if the pinhole exists in the can body 2, the light passing through the pinhole is transmitted to the light sensor 8. In this situation, although the detection value X1 is decreasing, the detection value X1 increases temporarily. In Fig. 5, the can body 2 held in the pocket 5 represented by G is in such situation.

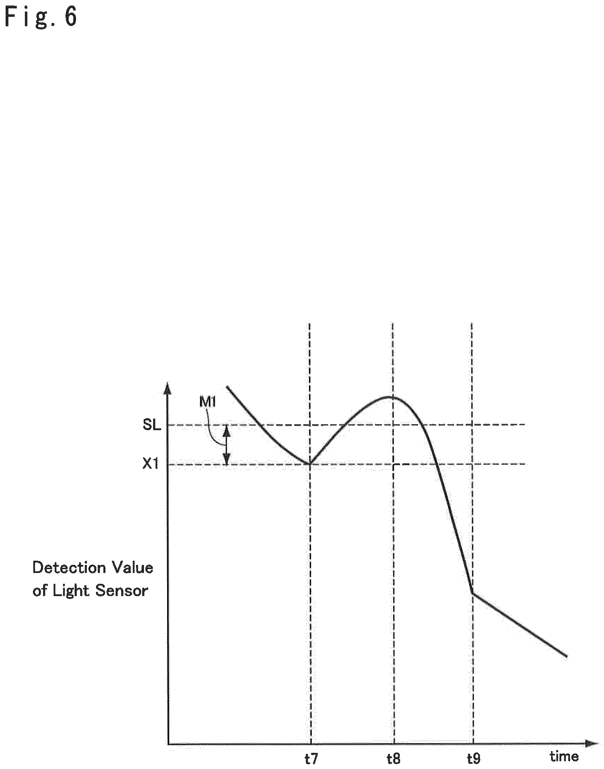

Turning to Fig. 6, there is shown a time chart showing a situation during execution of the second inspection pattern of the light tester 1 according to the present disclosure. As indicated in Fig. 6, the second value SL is obtained by adding the judgement value M1 to the detection value X1 at point t7 when the detection value X1 starts increasing. If the detection value X1 exceeds the second value SL, the rejection signal RS and the warning signal WS are transmitted at point t9 when the pocket 5 reaches the exit of the inspection zone 6. This is the aforementioned second inspection pattern. Point t8 will be explained later.

Here will be explained a case of ejecting the can body 2 held in the pocket 5 represented by G by conducting the third inspection pattern. Turning to Fig. 7, there is shown a time chart showing a situation during execution of the third inspection pattern of the light tester 1 according to the present disclosure. When the can body 2 held in the pocket 5 represented by G reaches the entrance of the inspection zone 6 at point t7, that is, when the can body 2 enters into the inspection zone 6, the first total value C1 is obtained by adding the judgement value M2 to the detection value X1(n) and the second stored value Y2 is updated to the first total value C1. Then, when the can body 2 reaches the center 6a of the inspection zone 6 at point t8, the third stored value Y3 is updated to the detection value X1(n+1). Then, when the can body 2 reaches the exit of the inspection zone 6 at point t9, the second total value C2 is obtained by adding the judgement value M2 to the detection value X1(n+2) and the fourth stored value Y4 is updated to the second total value C2. At point t9, in addition, the average value Ave between the second stored value Y2 and the fourth stored value Y4 is calculated. As described, the average value Ave corresponds to the third value TL, and the fifth stored value Y5 is updated to the third value TL. The fifth stored value Y5 is compared to the third stored value Y3. If the third stored value Y3 is greater than the fifth stored value Y5, an existence of the pinhole in the can body 2 held in the pocket 5 represented by G is determined. Consequently, the rejection signal RS is transmitted to the ejecting device 12 and the warning signal WS is transmitted to the warning device 13 at point t9. This is the aforementioned third inspection pattern.

Thus, according to the present disclosure, a plurality of the thresholds are set in the condition that the light sensor 8 is affected by the excessive amount of light. According to the present disclosure, therefore, an erroneous rejection of a flawless can having no pinhole as the defective can 2r can be prevented. For this reason, number of defective cans 2r to be tested again may be reduced. In addition, the rejection signal RS is transmitted to the ejecting device 12 and the warning signal WS is transmitted to the warning device 13. According to the present disclosure, therefore, the defective can 2r can be ejected while notifying the operator of the light tester 1 or other person of a detection of the defective can 2r.

### (Example 2)

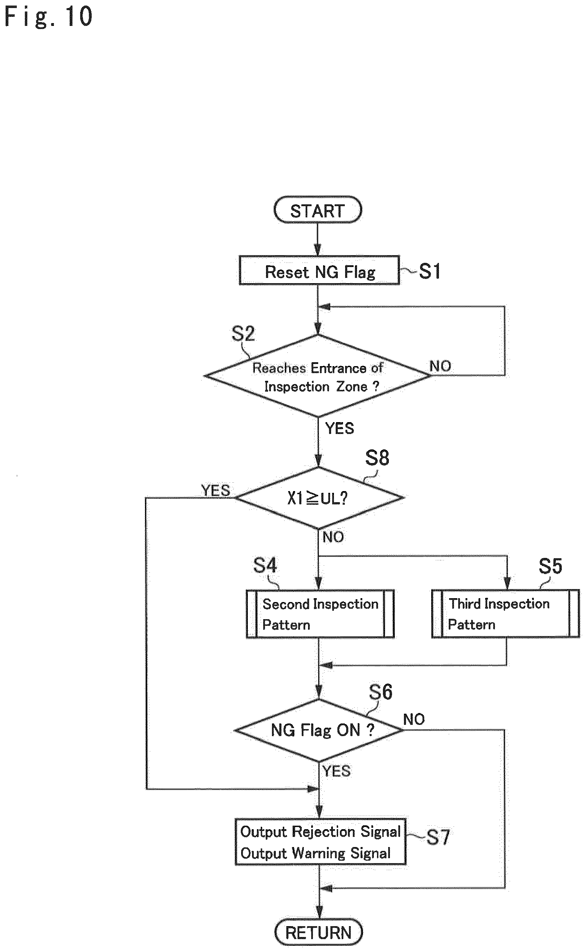

As described, according to the first example shown in Fig. 1, three inspection patterns are conducted simultaneously. In addition, according to the present disclosure, the light tester may also be configured to conduct the second inspection pattern and the third inspection pattern simultaneously in the case that the detection value X1 is smaller than the first value UL. Turning to Fig. 10, there is shown a second example according to the present disclosure. According to the second example, specifically, the second inspection pattern and the third inspection pattern are conducted simultaneously in the situation that the light sensor 8 is affected by the excessive amount of light. The routine shown in Fig. 10 is also repeated at predetermined interval or synchronously with a rotation of the star wheel 4. In the following explanation, detailed explanation for the steps in common with those in the routine shown in Fig. 1 will be omitted.

If the predetermined pocket 5 of the star wheel 4 reaches the entrance of the inspection zone 6 so that the answer of step S2 is YES, then it is determined whether or not the detection value X1 detected by the light sensor 8 is greater than the first value UL (at step S8). Such determination is similar to step SR101 of the second inspection pattern shown in Fig. 2. If the detection value X1 is greater than the first value UL so that the answer of step S8 is YES, the routine progresses to step S7 to transmit the rejection signal RS and the warning signal WS. By contrast, if the detection value X1 is smaller than the first value UL so that the answer of step S8 is NO, the second inspection pattern is conducted at step S4 and the third inspection pattern is conducted at step S5 simultaneously.

According the second example shown in Fig. 10, therefore, the pinhole testing of the can bodies can be executed in the condition that the light sensor 8 is still affected by a large amount of light. For this reason, an erroneous rejection of a flawless can having no pinhole as the defective can 2r can be prevented, and number of defective cans 2r to be tested again may be reduced.

Here, the present disclosure should not be limited to the foregoing examples. For example, the first inspection pattern and the third inspection pattern may be executed sequentially while the can body 2 is passing through the inspection zone. That is, the rejection signal RS and the warning signal WS may be transmitted when the detection value X1 detected by the light sensor 8 exceeds any of the first value to the third value to notify an existence of pinhole in the can body 2. In addition, those three inspection patterns may not be necessarily conducted simultaneously while the can body 2 is passing through the inspection zone. In this case, the pinhole testing of the can bodies may also be executed in the condition that the light sensor 8 is still affected by a large amount of light so that an erroneous rejection of a flawless can having no pinhole as the defective can 2r can be prevented.

### REFERENCE SIGNS LIST

1: light tester; 2: can body; 6: inspection zone; 7: light source; 8: light sensor; 11: ECU; UL: first value; SL: second value; TL: third value; M1: judgement value; M2: another judgement value; Ave: average value; X1: detection value of the light sensor; RS: rejection signal; WS: warning signal.

## Claims

1. A light tester (1) having a wheel (4) that is configured to convey a can body (2) to an inspection zone (6), a rotational angle sensor (9) that is configured to detect a rotational angle of the wheel (4), a light source (7) that is configured to emit light to the can body (2) conveyed by the wheel (4) to an inspection zone (6), a light sensor (8) that is configured to transmit a detection value (X1) of an amount of the light passing through the can body (2) to a controller (11), and the controller configured to transmit a detection signal (RS, WS) indicating an existence of a pinhole in the can body (2) in a case that a maximum value of the detection value (X1) in the inspection zone (6) exceeds a predetermined threshold (UL, SL, TL),
wherein the can body (2) is held in the wheel (4) in such a manner that an opening of the can body (2) is opened toward the light sensor (8);
wherein the controller (11) is configured to determine entrance and exit of the can body (2) into/from the inspection zone (6) based on a detection signal of the rotational angle sensor (9);
**characterized by** comprising:
a first inspection pattern in which a first value (UL) as a constant value is employed as the threshold;
a second inspection pattern in which a second value (SL) is employed as the threshold that is obtained by adding a predetermined judgment value (M1) to the detection value (X1) detected at a point when the detection value (X1) starts increasing in the inspection zone (6) to be greater than a first stored value (Y1) which is a previous value of the light entering into the last can body (2) passed through the inspection zone (6) that is transmitted from the light sensor (8) to the controller (11); and
a third inspection pattern in which a third value (TL) is employed as the threshold that is obtained by adding another judgment value (M2) to an average value (Ave) between the detection value (X1(n)) detected at a point when the can body (2) enters into the inspection zone (6) and the detection value (X1(n+2)) detected at a point when the can body (2) exits from the inspection zone (6);
wherein the controller is configured to conduct simultaneously at least two of the first inspection pattern to the third inspection pattern

2. The light tester (1) as claimed in claim 1, wherein the second inspection pattern and the third inspection pattern are conducted simultaneously in a case that the maximum value is smaller than the first value (UL).

3. The light tester (1) as claimed in claims 1 or 2, wherein the light tester (1) is configured to transmit the detection signal to an ejecting device (12) that ejects the can body (2) having a pinhole upon reception of the detection signal, and a warning signal (WS) to a warning device (13) that indicates a detection of the pinhole in the can body (2), when the maximum value exceeds any one of the first (UL) to third values (TL).

## Patentansprüche

1. Lichttester (1) umfassend eine Drehscheibe (4), welche konfiguriert ist, um einen Dosenkörper (2) zu einer Inspektions-Zone (6) zu befördern,
einen Drehwinkel-Sensor (9), welcher konfiguriert ist, um einen Drehwinkel der Drehscheibe (4) zu detektieren,
eine Lichtquelle (7), welche konfiguriert ist, um Licht in Richtung des von der Drehscheibe (4) zu einer Inspektions-Zone (6) beförderten Dosenkörpers (2), zu emittieren,
einen Licht-Sensor (8), welcher konfiguriert ist, um einen Detektionswert (X1) einer Lichtmenge, welche den Dosenkörper (2) durchdringt, zu einem Controller (11) zu übertragen und
wobei der Controller konfiguriert ist, um ein Detektionssignal (RS, WS), welches für den Fall, dass ein maximaler Wert des Detektionswertes (X1) in der Inspektions-Zone (6) einen vorgegebenen Schwellenwert (UL, SL, TL) überschreitet, eine Existenz eines kleinen Loches in dem Dosenkörper (2) anzeigt, zu übertragen,
wobei der Dosenkörper (2) in der Drehscheibe (4) derart gehalten ist, dass eine Öffnung des Dosenkörpers (2) zum Licht-Sensor (8) hin geöffnet ist;
wobei der Controller (11) konfiguriert ist, um, basierend auf einem Detektionssignals des Drehwinkel-Sensors (9), Eingang und Ausgang des Dosenkörpers (2) in/aus der Inspektions-Zone (6) zu bestimmen;
**dadurch gekennzeichnet, dass** dieser umfasst:
ein erstes Inspektionsmuster, bei welchem ein erster Wert (UL) als konstanter Wert als der Schwellenwert verwendet wird;
ein zweites Inspektionsmuster, bei welchem ein zweiter Wert (SL) als der Schwellenwert verwendet wird, der durch Hinzufügen eines vorbestimmten Beurteilungswertes (M1) zu dem Detektionswert (X1) erhalten wird, welcher Detektionswert an einem Punkt erfasst wird, an dem der Detektionswert (X1) in der Inspektionszone (6) zu steigen beginnt, um einen ersten gespeicherten Wert (Y1) zu übersteigen, welcher erster gespeicherter Wert ein vorgängiger Wert ist, von dem in dem vorgängig durch die Inspektionszone (6) durchgelaufenen Dosenkörper (2) eintretenden Licht, welches von dem Lichtsensor (8) zu dem Controller (11) übertragen wurde; und
ein drittes Inspektionsmuster, bei dem ein dritter Wert (TL) als der Schwellenwert verwendet wird, welcher erhalten wird durch Hinzufügen eines weiteren Beurteilungswertes (M2) zu einem Durchschnittswert (Ave) zwischen dem Detektionswert (X1(n)), der an einem Punkt erfasst wird, an welchem der Dosenkörper (2) in die Inspektionszone (6) eintritt, und dem Detektionswert (X1(n+2)), der an einem Punkt erfasst wird, an welchem der Dosenkörper (2) die Inspektionszone (6) verlässt;
wobei der Controller konfiguriert ist, um mindestens zwei aus den ersten bis dritten Inspektionsmustern gleichzeitig auszuführen.

2. Lichttester (1) nach Anspruch 1, wobei das zweite Inspektionsmuster und das dritte Inspektionsmuster gleichzeitig ausgeführt werden, in einem Fall bei dem der Maximalwert kleiner ist als der erste Wert (UL).

3. Lichttester (1) nach einem der Ansprüche 1 oder 2, wobei der Lichttester (1) konfiguriert ist, um das Detektionssignal an eine Auswurfvorrichtung (12) zu übertragen, welche den ein kleines Loch aufweisenden Dosenkörper (2) bei Empfang des Detektionssignals auswirft, und um ein Warnsignal (WS) an eine Warnvorrichtung (13) zu übertragen, welche eine Detektion eines kleinen Loches im Dosenkörper (2) anzeigt, wenn der Maximalwert irgend eines aus den ersten (UL) bis dritten (TL) Werten überschreitet.

## Revendications

1. Dispositif de test de lumière (1) présentant une roue (4) configurée pour transporter un corps de boîte (2) dans une zone d'inspection (6), un capteur d'angle de rotation (9) configuré pour capter un angle de rotation de la roue (4), une source de lumière (7) configurée pour émettre de la lumière en direction du corps de boîte (2) transporté par la roue (4) dans une zone d'inspection (6), un capteur de lumière (8) configuré pour transmettre une valeur de capture (X1) d'une quantité de lumière traversant le corps de boîte (2) à un contrôleur (11), le contrôleur étant configuré pour transmettre un signal de capture (RS, WS) indiquant l'existence d'un trou minuscule dans le corps de boîte (2) dans le cas où une valeur maximale de la valeur de capture (X1) dans la zone d'inspection (6) dépasse un seuil prédéterminé (UL, SL, TL) ;
selon lequel le corps de boîte (2) est maintenu dans la roue (4) de sorte qu'une ouverture du corps de boîte (2) est ouverte en direction du capteur de lumière (8) ;
selon lequel le contrôleur (11) est configuré pour calculer l'entrée et la sortie du corps de boîte (2) dans/en dehors de la zone d'inspection (6) sur la base de la capture d'un signal du capteur d'angle de rotation (9) ;
**caractérisé en ce que** le dispositif comprend :
un premier motif à inspection, selon lequel une première valeur (UL), en tant que valeur constante, est utilisée comme seuil ;
un deuxième motif d'inspection, selon lequel une deuxième valeur (SL) est utilisée comme seuil, qui est obtenue en ajoutant une valeur de jugement prédéterminée (M1) à la valeur de capture (XI) captée à un point lorsque la valeur de capture (X1) commence à augmenter dans la zone d'inspection (6) pour devenir plus importante qu'une première valeur stockée (Y1), qui est une valeur antérieure de la lumière entrant dans le dernier corps de boîte (2) ayant traversé la zone d'inspection (6), qui est transmise depuis le capteur de lumière (8) au contrôleur (11) ; et
un troisième motif d'inspection, selon lequel une troisième valeur (TL) est utilisée comme seuil, qui est obtenue en ajoutant une autre valeur de jugement (M2) à une valeur moyenne (Ave) entre la valeur de capture (X1(n)) captée à un point auquel le corps de boîte (2) entre dans la zone d'inspection (6) et la valeur de capture (X1(n+2)) captée à un point auquel le corps de boîte (2) quitte la zone d'inspection (6) ;
selon lequel le contrôleur est configuré pour effectuer simultanément au moins deux motifs d'inspection parmi les première, deuxième et troisième motifs d'inspection.

2. Dispositif de test de lumière (1) selon la revendication 1, selon lequel le deuxième motif d'inspection et le troisième motif d'inspection sont effectués de manière simultanée dans le cas où la valeur maximale est inférieure à la première valeur (UL).

3. Dispositif de test de lumière (1) selon la revendication 1 ou la revendication 2, selon lequel le dispositif de test de lumière (1) est configuré pour transmette le signal de capture à un dispositif d'éjection (12) qui éjecte le corps de boîte (2) présentant un trou minuscule lors de la réception du signal de capture, et un signal d'alerte (WS) à un dispositif d'alerte (13) indiquant la détection d'un trou minuscule dans le corps de la boîte (2), lorsque la valeur maximale dépasse l'une quelconque des première, deuxième ou troisième valeurs (UL, TL).
